# EUROPEAN PATENT SPECIFICATION

(11) **EP 4 373 995 B1**
(45) Date of publication and mention of the grant of the patent: **10.12.2025**
(21) Application number: 22748361.7
(22) Date of filing: 13.07.2022
(51) Int. Cl.: C25B 1/042, C25B 3/26, C25B 9/77, C25B 15/08

(54) **METHOD FOR TRANSIENT OPERATION OF A SOLID OXIDE ELECTROLYSIS CELL STACK**
VERFAHREN ZUM TRANSIENTEN BETRIEB EINES FESTOXID-ELEKTROLYSEZELLENSTAPELS
PROCÉDÉ DE FONCTIONNEMENT TRANSITOIRE D'UN EMPILEMENT DE CELLULE D'ÉLECTROLYSE D'OXYDE SOLIDE

(30) Priority: 20.07.2021 EP 21186582
(43) Date of publication of application: 29.05.2024
(73) Proprietor: Topsoe A/S, 2800 Kgs. Lyngby (DK)
(72) Inventor: KÜNGAS, Rainer, Peetri, Harjumaa (EE); BLENNOW, Bengt Peter Gustav, 3050 Humlebæk (DK); HEIREDAL-CLAUSEN, Thomas, 3460 Birkerød (DK); RASS-HANSEN, Jeppe, 1671 Copenhagen V (DK); NØRBY, Tobias Holt, 3600 Glostrup (DK)
(74) Representative: Topsoe A/S
(86) International application number: PCT/EP2022/069657
(87) International publication number: WO 2023/001669

(56) References cited:
- WO-A1-2014/114348
- WO-A1-2018/080571
- WO-A1-2019/197515

## Description

The invention relates to a method for transient operation of a solid oxide electrolysis cell (SOEC) stack having a cathode side and an anode side, suitably a SOEC stack adapted for CO₂ electrolysis and/or H₂O electrolysis, more specifically for the safe transient operation such as hot idle, shut-down and start-up operation, of the SOEC stack. Embodiments of the invention include supplying a flush gas comprising CO₂ to the anode side and applying a small electrolysis current of 0.001-0.05 A/cm² active cell area, such as 0.01-0.05 A/cm² active cell area, to the cells in the SOEC stack, for thereby generating oxygen in the anode side or for transporting to the anode side any oxygen already available in the cathode side. Other embodiments of the invention include operating the SOEC stack during shut-down with flush gas comprising CO₂ on the anode side, and recycling anode product gas comprising oxygen being generated under prior normal operation of the SOEC stack, with no small current being applied. The present invention enables to generate small amounts of O₂ to safeguard the oxygen concentration (pO₂) and stability of the oxy-electrode in the anode side. The invention provides protection of not only the oxy-electrode, but also the fuel electrode in the cathode side.

Solid oxide electrolysis cells (SOECs) can be used to electrochemically reduce H₂O to H₂, CO₂ to CO, or a combination of H₂O and CO₂ to syngas i.e. a gas mixture containing H₂ and CO. This conversion occurs on the cathode (fuel) side of the solid oxide electrolysis cell. On the anode (oxy) side of the cell, oxygen is electrochemically generated. SOECs as is well-known in the art, are normally stacked to form a SOEC stack.

During normal operation of the SOEC stack, i.e. no transient operation, the cathode-side gas stream enriched in for instance carbon monoxide (exiting an electrolysis cell) has a higher concentration of carbon monoxide than the cathode-side feed gas (entering the solid oxide electrolysis cell). Thus, as the cathode-side feed gas e.g. comprising CO₂ is fed to the cathode side of the SOEC stack, at least part of the CO₂ is electrochemically reduced into CO (i.e. CO is electrochemically generated), thereby forming a cathode-side product gas that is enriched in CO. Furthermore, if a cathode-side feed gas comprising a mixture of H₂O and CO₂ is fed to the cathode side of an operating SOEC, at least part of either H₂O or CO₂ or both is electrochemically reduced, thereby forming a cathode-side product gas that is enriched in hydrogen and H₂ and CO, respectively. Similarly, an anode-side gas stream enriched in O₂ (exiting an electrolysis cell) has a higher concentration of O₂ than in the anode-side feed gas stream (entering the solid oxide electrolysis cell). Note that according to this definition, a 10% O₂, 90% CO₂ anode-side product gas stream may be considered to be enriched in O₂, if the anode-side feed gas stream has an oxygen content lower than 10%. Similarly, the 10% O₂, 90% CO₂ anode-side product gas stream is considered to be enriched in O₂ according to the definition, although the oxygen content in the gas is lower than in atmospheric air.

Also, during normal operation, the normal stack operation temperature, herein also referred to as normal operating temperature, is suitably 600-1000°C, such as 700, 750°C or 800°C, which is the temperature used during production of CO in a stack with a continuously applied electrolysis current. The high temperatures, for instance 700 or 800°C, are normally required in order to reach sufficient oxide ion conductivities in the ceramic membranes that are used as electrolytes. Commonly used electrolyte materials include stabilized zirconias, such as yttria-stabilized zirconia (YSZ), doped cerias, doped lanthanum gallates, and others. Commonly used oxy-electrode materials include perovskite materials, such as Sr-doped LaMnO₃ (LSM), Sr-doped LaFeO₃ (LSF), Sr-doped LaCoO₃ (LSC), Sr-doped La(Co,Fe)O₃ (LSCF), Sr-doped SmCoO₃ and many others. Perovskite materials are further commonly mixed with doped cerias to form composite oxygen electrodes (SOEC anodes). Dopants other than Sr, e.g. Ca, Ba are known, as are materials other than perovskites, e.g. Ruddlesden-Popper phases. Accordingly, most of the commonly used oxy-electrode materials include an alkaline earth metal, such as Sr, Ca or Ba. Typical examples include the above mentioned LSM, LSC, LSCF, as well as Sr-doped Ba(Co,Fe)O₃ (BSCF), Ca-doped LaFeO₃ (LCF) and others.

All of these materials are prone to decomposition in CO₂-rich atmospheres due to the formation of SrCO₃, BaCO₃, CaCO₃, etc. The decomposition is dependent on 1) temperature, 2) CO₂ concentration around and inside the pores of the oxy-electrode, 3) O₂ concentration around and inside the pores of the oxy-electrode. Thermodynamically, decomposition of the oxy-electrode materials and thus the formation of carbonates, is more favourable at lower temperatures, especially below 800°C. Furthermore, decomposition is more favourable at high CO₂ concentrations and low O₂ concentrations. As the oxy-electrode material decomposes, it loses its electrochemical activity, thereby resulting in performance loss. Due to the trends listed above, the SOEC stack is especially prone to damage due to carbonate formation, particularly during transient operation such as hot-idle, shut-down or start-up operation.

Due to the risk of carbonate formation, SOEC oxy-electrodes are typically never exposed to pure CO₂ or CO₂-rich gas streams. Instead, the oxy-side of SOECs is typically flushed with air. In particular, the use of CO₂ as flush gas in the anode side of an SOEC stack is detrimental during transient operation, yet beneficial for normal operation of the SOEC as the suitable flush gas instead of e.g. air, due to risk of especially nitrogen leaking from the anode side to the cathode side when using air. Nitrogen is notoriously difficult to remove, and it will eventually be carried in the product stream from the cathode side together with e.g. CO.

Applicant's WO 2016091636, WO 2013131778 and WO 2014254253 describe the production of high purity CO by electrolysis of CO₂ in a solid oxide electrolysis cell or SOEC stack. These patent applications only deal with a SOEC stack that is producing CO, i.e. a stack with a continuously applied electrolysis current at normal operating temperatures. These applications do not mention how the stack is operated during start-up, shutdown or hot idle. Applicant's WO 2012159644 describes electric anode protection (EAP) of a solid oxide fuel cell (SOFC). Applicant's WO 2011137916 describes electric anode protection of a fuel cell stack (SOFC) during transient operation, such as start-up and shut-down operation, with the purpose of protecting the fuel electrode of the SOFC against oxidation throughout its lifetime. Applicant's WO 2014114348 describes hot idle case of a SOEC stack with N₂ flush on the feed side and/or the oxygen side for minimizing the in-flux of oxygen molecules.

It is an object of the present invention to provide a safe method for start-up, shut-down and hot idle operation of a SOEC stack in CO₂ electrolysis and/or H₂O-electrolysis.

It is another object of the present invention to provide a safe and smooth transient operation of a SOEC stack while using CO₂ as flush gas in the anode side.

These and other objects are solved by the present invention.

Accordingly, in a first aspect the invention, as recited in appended claim 1, is a method for transient operation of a solid oxide electrolysis cell (SOEC) stack having a cathode side and an anode side, the method comprising:
- supplying a flush gas comprising CO₂ to said anode side;
- applying a small electrolysis current of 0.001-0.05 A/cm² active cell area, to the cells in the SOEC stack, for thereby generating oxygen in the anode side or for transporting to the anode side any oxygen already available in the cathode side.

The invention provides protection of both the anode (oxy-electrode) and the cathode (fuel electrode) when the small current is being applied, as well as the use of CO₂ as the flush gas in the anode side during the transient operation. The risk of detrimental carbonate formation in the oxy-electrode and contact layer is thereby mitigated. Furthermore, since CO₂ may be already available for use during normal operation as the SOEC stack is adapted for CO₂ and/or H₂O electrolysis, there is a smooth transition to/from normal operation. Safe and smooth transient operation is thereby achieved.

Contrary to the prior art, where normally there is electric protection of either electrode, for instance electric anode protection in a SOEC stack, or equivalently electric cathode protection in a SOEC stack, and where air or an inert flush gas such as N₂ is used in the anode side in a SOEC stack, the present invention enables in a simple manner, protection of not only the oxy-electrode, but also the fuel electrode, while at the same time using a flush gas comprising CO₂ in the anode side in a SOEC stack.

In an embodiment, as recited in appended claim 2, the method comprises:
(a) interrupted hot-idle operation, wherein hot idle operation is defined as open-circuit voltage (OCV) operation of the SOEC stack at temperatures lower than normal SOEC stack operation temperature, such as 10-200°C, e.g. 50-200°C or 100-200°C lower than normal SOEC stack operation temperature, said interrupted hot-idle operation being conducted by supplying said flush gas comprising CO₂ to said anode side, applying said small electrolysis current to the cells in the SOEC stack, and electrochemically generating oxygen for thereby forming an anode-side product gas stream enriched in oxygen;
   or
(b) shut-down operation by supplying said flush gas comprising CO₂ to said anode side, and recycling at least a portion of anode-side product gas stream comprising oxygen being generated during a prior normal operation of the SOEC stack, to the flush gas, e.g. by combining the at least a portion of anode-side product gas stream comprising oxygen, with the flush gas; applying said small electrolysis current to the cells in the SOEC stack, and electrochemically generating oxygen for thereby forming an anode-side product gas stream enriched in oxygen;
   or
(c) start-up operation by supplying a flush gas comprising CO₂ to said anode side; and by supplying a cathode-side feed gas stream comprising any of CO₂, CO, H₂O, H₂ and mixtures thereof, optionally also an inert such as any of N₂,He, Ar and mixtures thereof, to said cathode side; applying said small electrolysis current to the cells in the SOEC stack for transporting at least part of said oxygen already available in the cathode side, to said anode side

As used herein, the term "any oxygen already available in the cathode side" or "oxygen already available in the cathode side" means oxygen which may have leaked to the cathode side.

As used herein, the term "transient operation" means non-continuous operation of the SOEC stack and where the stack has not reached a steady state corresponding to normal operation of the SOEC, including the supply of a continuous current. As used herein, transient operation includes: hot-idle and thereby interrupting the hot-idle, shut-down and start-up.

As used herein, "hot-idle operation", is also referred to as "hot-idle" or "hot-idle mode". "Hot-idle operation", as already recited above, is defined as open-circuit voltage (OCV) operation of the SOEC stack at temperatures lower than normal SOEC stack operation temperature, such as 10-200°C, e.g. 50-200°C or 100-200°C lower than normal SOEC stack operation temperature. At OCV there is no external load connected and there is no electrical current and thereby also no product gases being generated. The potential difference is only due to pO₂ differences at the two electrodes.

As used herein, shut-down operation or simply shut-down means operation of the SOEC stack away from normal operation by cooling down the SOEC stack and removing the current applied during normal operation.

As used herein, start-up operation or simply start-up means operation of the SOEC stack from a low starting temperature, such as room temperature, up to the normal temperature and normal operation of the SOEC.

Normal operation includes continuously applying a current significantly higher than 0.05 A/cm² active cell area, typically 0.1 or higher A/cm², such as 0.45 A/cm² or higher, and at normal SOEC stack operation temperature of 600-1000°C, suitably 700-750°C or 700-800°C.

As used herein, the term "CO₂ and/or H₂O-electrolysis" means three modes of operation on the fuel side (cathode): 1) CO₂ electrolysis, 2) H₂O electrolysis, 3) CO₂ and H₂O electrolysis combined.

As used herein, the term "H₂O and CO₂-electrolysis" means co-electrolysis i.e. co-electrolysis mode, whereby CO₂ and particularly H₂O (steam) are electrolyzed. It would therefore be understood, that by supplying a mixture of H₂O and CO₂ to said cathode side, the SOEC stack is intended for normal operation in co-electrolysis mode. The thus obtained cathode-side product gas stream enriched in carbon monoxide and hydrogen is a syngas (synthesis gas). Synthesis gas, as is well known in the art, means a gas mixture comprising carbon oxides, primarily carbon monoxide, and hydrogen.

As used herein, the term "H₂/N₂"; or similar such as "H₂/H₂O", means a mixture of the corresponding species; thus H₂/N₂ means a mixture of H₂ and N₂.

As used herein, the terms cathode-side and fuel-side are used interchangeably. It would also be understood that cathode means fuel electrode in electrolysis operation mode.

As used herein, the terms anode side and oxy-side are used interchangeably. It would be understood that anode means oxygen (oxy-) electrode in electrolysis operation mode.

As used herein, the term "enriched in X", for instance where X is oxygen, is understood as "the concentration of X in a stream is increased compared to the concentration of X in the corresponding feed gas".

As used herein, the term "electrochemically generating" refers to a process where chemical species are formed via an electrochemical process, i.e. a chemical process involving electron transfer. Such processes include e.g. the oxygen evolution reaction (2O²⁻ = O₂ + 4e⁻), the water reduction reaction (H₂O + 2e⁻ = H₂ + O²⁻) and the carbon dioxide reduction reaction (CO₂ + 2e⁻ = CO + O²⁻).

As used herein, the term "at least a portion of" a certain gas stream such as the anode-side product gas stream, means that the entire gas stream or a fraction of the stream is used. The gas stream may simply be split into fractions of identical composition. It is not meant to refer to a separation of the components of the gas.

The invention ensures safely handling a SOEC stack during transient operation when using CO₂ as flush gas on the anode side. Normally the transient modes, e.g. hot idle, are conducted at open circuit voltage (OCV), i.e. no current is applied. Thus, during the transient modes there is often no product gas generated as such, since the feed gasses are only passed through the SOEC stack.

The invention is then, for instance in embodiment (a), modifying the otherwise normal hot-idle (normally being conducted under OCV) by operating the SOEC stack with a gas comprising CO₂ as flush gas on the anode side and applying a small current of 0.001-0.05 A/cm² such as 0.01-0.05 A/cm² to generate small amounts of O₂ as part of the anode product gas, thus safeguarding the oxygen concentration (pO₂) and thereby stability of the oxy-electrode. Optionally, a recycle of the thus generated anode product gas is provided, as recited in a below embodiment. Accordingly, while transient operation in hot idle mode normally involves OCV i.e. no current, the present invention purposely interrupts the hot idle mode by applying the small current of 0.001-0.05 A/cm² active cell area, such as 0.01-0.05 A/cm². The risk of carbonate formation in the anode is significantly reduced due to the increased pO₂.

In another aspect, as recited in appended claim 12, the invention includes also a method for transient operation of a solid oxide electrolysis cell (SOEC) stack having a cathode side and an anode side, the method comprising:
a shut-down operation by supplying a flush gas comprising CO₂ to said anode side, and recycling at least a portion of anode-side product gas stream comprising oxygen being generated during a prior normal operation of the SOEC stack, to the flush gas;
optionally, as recited in appended claim 13: subsequently applying a small electrolysis current of 0.001-0.05 A/cm² active cell area, to the cells in the SOEC stack, and electrochemically generating oxygen for thereby forming an anode-side product gas stream enriched in oxygen.

Hence, this represents an alternative to embodiment (b) according to the first aspect of the invention. In accordance with this alternative embodiment, the invention includes therefore operating the SOEC stack during shut-down with a gas comprising CO₂ as flush gas on the anode side, and recycling anode product gas comprising oxygen being generated under prior normal operation of the SOEC stack. No small current is applied. The normal operation may include recycle of anode product gas. This alternative embodiment corresponds to the SOEC stack being operated in shut-down mode immediately after the current applied during normal operation is removed. The risk of carbonate formation in the anode is significantly reduced due the increased pO₂.

Optionally, the small current is subsequently applied thereby farther generating small amounts of O₂ and providing stability to the oxy-electrode. The small current may be applied subsequently yet while still conducting the recycle or after conducting the recycle.

During normal SOEC stack operation, i.e. no transient operation, the electrolyte sandwiched between the anode and cathode transports oxygen-ions (O²⁻) from the cathode (fuel electrode) to the anode (oxy-electrode), where the oxygen ions combine to oxygen (O₂). When conducting the method of the invention as start-up operation according to embodiment (c), the electrolyte in the SOEC stack transports oxygen-ions (O²⁻) from the cathode e.g. from the reaction CO₂ + 2e- = CO + O²⁻ or H₂O + 2e- = H₂ + O²⁻ to the anode. Any oxygen already available in the cathode side - undesired oxygen that might have migrated to the cathode side by unwanted leaks - is "pumped" from the cathode side to the anode side with the small electrolysis current. The risk of carbonate formation in the anode is significantly reduced due the increased pO₂.

The likelihood of carbonate formation in the oxy-electrode (anode) is a function of temperature, CO₂ concentration and O₂ concentration. In order to avoid carbonate formation during exposure to lower temperatures than normal (during start-up, shutdown, hot idle), the invention as recited above, provides for an increased concentration of O₂ inside the pores of the oxy-electrode and also in the gas channel adjacent to, e.g. above, the oxy-electrode. The invention thus prevents oxy-electrode degradation due to carbonate formation and thereby safe operation under transient operation of the SOEC stack, particularly when used for CO₂ and/or H₂O electrolysis under normal operation.

In an embodiment, as recited in appended claim 3, operation (a) i.e. interrupted hot-idle operation, further comprises: recycling at least a portion of the anode-side product gas stream enriched in oxygen, e.g. by combining the at least a portion of the anode side product gas enriched in oxygen with the flush gas. As the small current is applied, oxygen is generated in the anode side and exits as part of the anode-side product gas stream. This is recycled e.g. by combining the at least a portion of the anode side product gas enriched in oxygen with the flush gas. The risk of carbonate formation in the anode is thus further mitigated due the increased pO₂. Furthermore, the use of the small current reduces the amount of the required recycle needed, thus reducing power consumption in the recycle loop.

In an embodiment, as recited in appended claim 4, the anode-side product gas enriched in oxygen of operation (a) i.e. interrupted hot-idle, or the anode-side product gas stream comprising oxygen of operation (b) i.e. shut-down, has an oxygen content of 5-100 vol.%, such as 10-60 vol.%, for instance 20-40 vol.%; or such as 80-100 vol.%, for instance 95-100 vol.% O₂.

In another embodiment, as recited in appended claim 5, the at least a portion of the anode-side product gas stream enriched in oxygen which is recycled in operation (a) i.e. interrupted hot-idle, or operation (b) shut-down, is between 5 vol.% and 90 vol.%, such as 10, 20, 30, 40, 50, 60, 70, 80, or 85 vol.%. It would be understood, that these values represent the amounts of recycled gas with respect to the flush gas. The amount of recycled gas is tailored to maintain an oxygen content of no more than 50 vol.%, suitably 5-50 vol.%, as recited in appended claim 5, due to safety reasons. Too high O₂ concentrations, especially in an operating mode where the oxygen is not used as a product, is not desired. At the same time, the content of oxygen is high enough to avoid carbonate formation and dissociation of the oxy-electrode.

In an embodiment, as recited in appended claim 6, the flush gas comprising CO₂ contains 5-100 vol.% CO₂, such as 20-100, 40-100, 50-100, 60-100, 70-100, 80-100 vol.% CO₂. In a particular embodiment, as recited in appended claim 6, the flush gas is pure CO₂. As used herein, pure CO₂ means a purity of 99.5 vol.% CO₂ or higher. Accordingly, the method of the invention is herein applicable in a situation where i) CO₂ is intended for use as the flush gas on the anode side ( oxy-side) of the stack during normal operation, i.e. during production of CO, and where simultaneously ii) no oxygen-containing gas, such as air or pure oxygen, is provided for oxy-side flush during particularly start-up, shut-down, or hot idle. It would also be understood that normally air (N₂/O₂) is used as a flush gas on the anode side during normal operation of SOEC stacks, whereas the present invention purposely uses a gas comprising CO₂, preferably pure CO₂, as the flush gas. The invention is thus particularly advantageous when SOEC is used for producing e.g. pure CO, and CO₂ flush gas (instead of air) is thus used on the oxy-side. Thereby, there is no need for a dedicated air blower or an air compressor for providing a flush gas (air), and which would only be required to operate during start-up, shut-down and the interrupted hot idle.

Suitably, the flush gas comprising CO₂ is free of air (N₂/O₂). Suitably also, the content of nitrogen is low or non-existent i.e. absent of nitrogen, for instance less than 10 vol.%, or less than 1 vol.%, for instance 0.1 vol.% or 0 vol.% N₂. Suitably, the pure CO₂ is also absent of nitrogen. Low nitrogen content or absence of nitrogen in the flush gas results in low nitrogen content in the oxygen-enriched stream, which is often desirable: low nitrogen reduces the risk of nitrogen leaking into the fuel-side of the SOEC, for instance during start-up, which then will be necessary to remove, where carbon monoxide of high purity is required to be withdrawn later during normal operation as the cathode-side product gas stream.

It is to be noted, that if the oxy-side of the SOEC is exposed to pure CO₂ as flush gas during start-up, shut-down, or hot idle, there will normally be a risk of detrimental carbonate formation in the oxy electrode. By the present invention this risk is prevented by increasing the oxygen-content in the oxy-side flush gas, e.g. by recycling some gas exiting the oxy-side of the stack back to the oxy-side inlet, and/or by applying a small electrolysis current i.e. 0.001-0.05 A/cm² active cell area, such as 0.01-0.05 A/cm² active cell area, to the cells in the stack, as recited above. For instance, the SOEC stack may use a current in the range 1-5 A and active cell area of 109 cm² or 100 cm² (active cell area of one cell), thus corresponding to the above range of the applied small current. It would also be understood, that for the purposes of the present application, the term "current" is also understood as "current density", as calculated above.

The small current represents therefore an "electric electrode (anode-cathode) protection". It would be understood that "anode-cathode" means "anode and cathode". It would therefore be understood, that for the purposes of the present application, the term "electric electrode (anode-cathode) protection" means electric protection of the anode and the cathode by the applied small current (0.001-0.05 A/cm² active cell area, such as 0.01-0.05 A/cm² active cell area).

Hence, by the present invention, the small current protects both the anode and the cathode. It "pumps" unwanted O₂ from the fuel electrode (cathode) to keep the nickel therein reduced, and at the same time protect the oxy-electrode (anode) from reacting with CO₂, since the O₂ is evolved on this side acting as a protective gas.

In an embodiment, as recited in appended claim 7, in operation (c) i.e. start-up operation, the cathode side feed gas comprises one or more reducing species, suitably CO and/or H₂, for instance at least 1 vol.% of the one or more reducing species. In a particular embodiment, as recited in appended claim 7, the cathode side feed gas comprises also, i.e. in addition to said reducing species, CO₂ and/or H₂O.

It is desirable to have a reducing environment on the cathode side, such as at least 1 vol.% of reducing species, as recited above. Hence, upon start-up with e.g. H₂O and/or CO₂, reducing species particularly H₂ and/or CO are present as well. For instance, the cathode side feed gas may comprise CO/CO₂.

In a particular embodiment, as recited in appended claim 8, operation (c) further comprises:
- heating up said cathode side feed gas to a first temperature of 100-200°C below normal SOEC stack operation temperature, for instance up to a first temperature of 550°C or 650°C;
- subsequently providing CO₂ and/or H₂O in said cathode side feed gas and further heating up to normal SOEC stack operation temperature, for instance up to 750°C or 800°C.

By way of example, the start-up may be initiated at room temperature (20-25°C) with a lean H₂ mixture such as H₂/N₂ mixture having a low content of H₂ being provided in the cathode side feed gas. After heating to e.g. 650°C, the CO₂ and/or H₂O are provided and then heated to the required normal operation temperature of e.g. 750°C or 800°C.

In an embodiment, as recited in appended claim 9, the method comprises operating at temperatures of 500-700°C or below. It would be understood that these temperatures are 100-200°C below the normal operation temperature of the SOEC stack. For instance, the operating temperature suitably being 500°C or 550°C or 600°C according to the invention i.e. under transient operation, and the normal temperature of the SOEC stack being e.g. 700°C or 750°C or 800°C, respectively.

While the high temperatures are necessary to reach sufficient oxide ion conductivity, it is known that high temperatures may also result in e.g. long start-up times. Reducing the temperature to 600°C or below to reduce start-up times while at the same time using CO₂ in the oxy-side of the SOEC stack, is however highly counterintuitive, as the use of CO₂ is known to be a problem particularly below 800°C. The present invention enables therefore also to provide a shorter start-up time by operating at temperatures of 500-700°C or below, while at the same time providing the desired use of a gas comprising CO₂ as the flush gas, as the risk of carbonate formation is mitigated.

Accordingly, the SOEC stack can now be operated at transient conditions, particularly at lower temperatures than during normal operation without significant performance degradation despite the SOEC anode being exposed to a feed gas comprising CO₂. Furthermore, a better flexibility in selection of oxy-electrode materials is possible. For instance, despite LSM being more stable than LSCF, it is now also possible to use an LSCF oxy-electrode. The latter is particularly suitable because it is known to have higher activity (performance) as an oxy-electrode in solid oxide electrolysis cells compared to LSM.

The detrimental effect of using carbon dioxide has been investigated extensively. For example, S. Darvish et al. (Journal of Power Sources, 336 (2016) 351-359) have studied the probability of SrCO3 formation as a function of temperature, CO₂ partial pressure, O₂ partial pressure, as well as LSCF composition using thermodynamic and electrochemical calculations. They proposed that LSCF decomposition in CO₂-enriched conditions occurs via the following reaction:

LSCF(reactant) + CO₂ = LSCF(product) + SrCO₃ + (Co,Fe)₃O₄ + Fe₂O₃,

where LSCF(reactant) is the LSCF sample before the CO₂ exposure, LSCF(product) is the sample after CO₂ exposure (which may have different composition than LSCF(reactant) because of the formation of new phases), (Co,Fe)₃O₄ is a cobalt-iron mixed oxide with a spinel structure, where the ratio of Co:Fe may vary, and Fe₂O₃ is corundum. S. Darvish et al. demonstrated that high CO₂ partial pressures and low O₂ partial pressures increased the thermodynamic probability of SrCO₃ formation. More specifically, they showed that 1) at temperatures higher than 427°C, SrCO₃ becomes stable at lower oxygen partial pressures at all studied temperatures; 2) the higher the temperature, the more significant the impact that any changes in oxygen partial pressure have on the stability of SrCO₃. Even more specifically, they show that more than 50% of the La_{0.6}Sr_{0.4}Co_{0.2}Fe_{0.8}O₃ (LSCF) should thermodynamically decompose into SrCO₃ when exposed to 30 vol% CO₂ under reducing conditions (oxygen partial pressure of 10⁻⁵ atm) at 727°C. Furthermore, SrCO₃ becomes more stable as the Sr concentration in LSCF is increased and/or the Fe concentration in LSCF is decreased. They also compared the stability of (La_{0.8}Sr_{0.2})_{0.98}MnO₃ (LSM) to the stability of La_{0.6}Sr_{0.4}Co_{0.2}Fe_{0.8}O₃ (LSCF) and concluded that LSM is more stable than LSCF in CO₂-enriched gas.

Further to the above, V. Esposito et al., Solid State Ionics, 227 (2012) 46-56 have demonstrated that LSC with a composition La_{0.6}Sr_{0.4}CoO_{3-δ'} decomposes into La_{0.6}Sr_{0.4-x}O_{3-δ"} + x SrCO₃ + 0.5 (δ'+ δ") O₂ + x CoO, when exposed to pure CO₂ at 800°C. Here, δ' and δ" refer to oxygen non-stoichiometry in the perovskite and x refers to the extent of the decomposition (0 < x ≤ 0.4). Decomposition was confirmed by x-ray diffraction and thermogravimetric analysis. The oxygen flux through an LSC membrane (i.e. performance) decreased by more than a factor of 4, when the membrane was exposed to pure CO₂ at 780°C. Esposito et al. conclude that "the use of CO₂ is particularly detrimental below 800°C".

In an embodiment, as recited in appended claim 10, the small electrolysis current applied to the cells in the stack is 0.02-0.04 A/cm² active cell area, such as 0.03 A/cm² active cell area. The small current and thus O₂ production on the anode side has to counteract the leak rate into the cathode chamber - sometimes referred to as the leak current. This value will be low of a fresh pristine stack, say 0.001-0.005 A/cm², but will be larger if the stack or gaskets have degraded, e.g. up to 0.05 A/cm² or larger - but then the stacks are too damaged to continue operation. Hence, the small current applied to the stack prevents also leak currents when the SOEC stack operates under transient conditions.

In an embodiment, as recited in appended claim 11, the transient operation is shut-down, i.e. operation (b), and the flow of inert flush gas, in particular a gas stream comprising CO₂ such as pure CO₂, is 0.02 NL/min/cm² active cell area or lower, such as 0.002 NL/min/cm² active cell area. Said flow is used while simultaneously applying said electrolysis current. It has also been found that these are particularly suitable conditions for increasing the oxygen concentration inside the pores of the oxy-electrode when conducting a shutdown of the SOEC stack.

It would be understood that any of embodiments and associated benefits of the first aspect of the invention, may be used with the alternative embodiment according to said "another aspect of the invention", and vice versa.

Fig. 1 shows a schematic depicting of the O₂ concentration inside the pores and around the oxy electrode of a hot idle electrolysis cell (under OCV, i.e. no current; transient operation) and exposed to CO₂ flush.

Fig. 2 shows a schematic depicting of the O₂ concentration inside the pores and around the oxy electrode of an electrolysis cell under normal operation exposed to CO₂ flush (no transient operation).

Fig. 3 in accordance with the invention, in particular an embodiment according to said another aspect of the invention, shows a schematic depicting of the O₂ concentration inside the pores and around the oxy electrode of a hot idle electrolysis cell (under OCV, i.e. no current; transient operation) exposed to CO₂ flush, but with oxy-side recycle: shut-down after immediately removing current used during normal operation.

Fig. 4 in accordance with the invention, shows a schematic depicting the O₂ concentration inside the pores and around the oxy electrode of an interrupted hot idle electrolysis cell exposed to CO₂ flush: hot idle transient operation, but interrupted by applying a small electrolysis current and thus enabling "electric electrode (anode-cathode) protection".

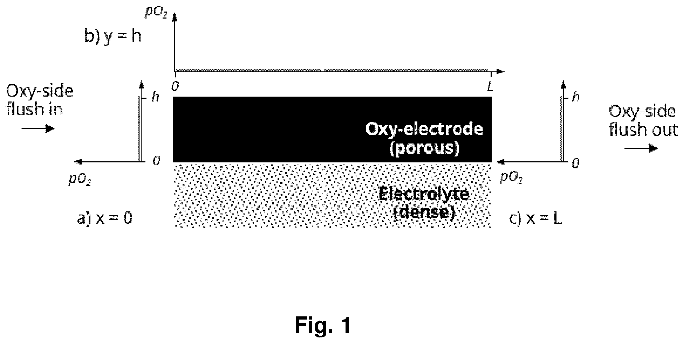

With reference to Fig. 1, a Sr-doped La(Co,Fe)O₃ (LSCF) oxy-electrode is exposed to a CO₂ flush gas. The partial pressure of oxygen (pO₂) is shown along the length and height (thickness, h) of the oxy-electrode from length x=0 corresponding to gas inlet to length x=L corresponding to gas outlet. The absence of oxygen or very low pO₂ increases the risk of carbonate formation.

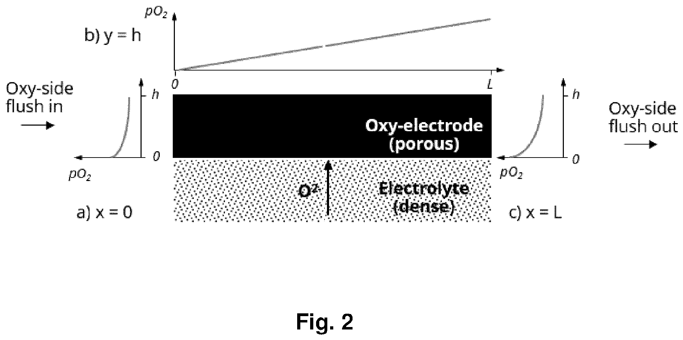

With reference to Fig. 2, a Sr-doped La(Co,Fe)O₃ (LSCF) oxy-electrode is exposed to a CO₂ flush gas under normal operation. The oxygen ion flux through the electrolyte results in an oxygen gradient both through the oxy-electrode, but also in the gas channel above the oxy-electrode from gas inlet (x=0) to gas outlet (x=L). Carbonate risk is reduced during normal operation due to the increased pO₂.

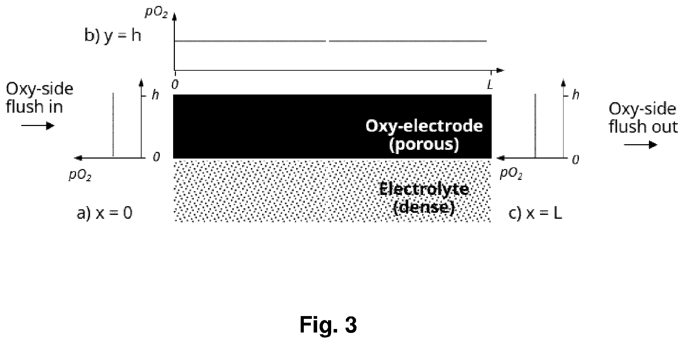

With reference to Fig. 3 (another aspect of the invention), it is observed that the oxygen in the recycled gas increases the pO₂ everywhere. No decrease in pO₂ through the oxy-electrolyte occurs, i.e. there is no gradient of oxygen through the oxy-electrolyte. Similarly, there is no oxygen gradient in the gas channel above the oxy-electrode from gas inlet (x=0) to gas outlet (x=L). Carbonate risk is significantly reduced due to the increased pO₂.

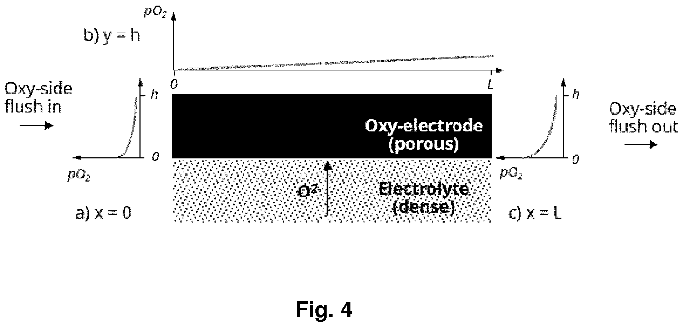

With reference to Fig. 4 (invention), similar to what is observed in connection with Fig. 2, the carbonate risk is also reduced due to the increased pO₂, although not with the same high levels of pO₂ as in Fig. 3.

Combining the recycle as in Fig. 3 and applying the small current ("electric electrode (anode-cathode) protection") as in Fig. 4, apart from significantly reducing carbonate risk, also reduces the required recycle and thus reduce power consumption in the recycle loop.

## Claims

1. Method for transient operation of a solid oxide electrolysis cell (SOEC) stack having a cathode side and an anode side, the method comprising:
- supplying a flush gas comprising CO₂ to said anode side;
- applying a small electrolysis current of 0.001-0.05 A/cm² active cell area to the cells in the SOEC stack, for thereby generating oxygen in the anode side or for transporting to the anode side any oxygen already available in the cathode side.

2. Method according to claim 1, comprising:
(a) interrupted hot-idle operation, wherein hot idle operation is defined as open-circuit voltage (OCV) operation of the SOEC stack at temperatures lower than normal SOEC stack operation temperature, such as 10-200°C, e.g. 50-200°C or 100-200°C lower than normal SOEC stack operation temperature, said interrupted hot-idle operation being conducted by supplying said flush gas comprising CO₂ to said anode side, applying said small electrolysis current to the cells in the SOEC stack, and electrochemically generating oxygen for thereby forming an anode-side product gas stream enriched in oxygen;
or
(b) shut-down operation by supplying said flush gas comprising CO₂ to said anode side, and recycling at least a portion of anode-side product gas stream comprising oxygen being generated during a prior normal operation of the SOEC stack, to the flush gas, e.g. by combining the at least a portion of anode-side product gas stream comprising oxygen, with the flush gas; applying said small electrolysis current to the cells in the SOEC stack, and electrochemically generating oxygen for thereby forming an anode-side product gas stream enriched in oxygen;
or
(c) start-up operation by supplying a flush gas comprising CO₂ to said anode side; and by supplying a cathode-side feed gas stream comprising any of CO₂, CO, H₂O, H₂ and mixtures thereof, optionally also an inert such as any of N₂,He, Ar and mixtures thereof, to said cathode side; applying said small electrolysis current to the cells in the SOEC stack for transporting at least part of said oxygen already available in the cathode side, to said anode side.

3. Method according to claim 2, wherein (a) further comprises: recycling at least a portion of the anode-side product gas stream enriched in oxygen.

4. Method according to any of claims 2-3, wherein the anode-side product gas enriched in oxygen of operation (a), or the anode-side product gas stream comprising oxygen of operation (b), has an oxygen content of 5-100 vol.%, such as 10-60 vol.%, for instance 20-40 vol.%; or such as 80-100 vol.%, for instance 95-100 vol.% O₂.

5. Method according to any of claims 2-4, wherein the at least a portion of the anode-side product gas stream enriched in oxygen which is recycled in operation (a) or (b), is between 5 vol.% and 90 vol.%, such as 10, 20, 30, 40, 50, 60, 70, 80, or 85 vol.%, suitably in the range 5-50 vol.%.

6. Method according to any of claims 1-5, wherein the flush gas comprising CO₂ contains 5-100 vol.% CO₂, such as 20-100, 40-100, 50-100, 60-100, 70-100, 80-100 vol.% CO₂, suitably the flush gas is pure CO₂ having 99.5 vol.% CO₂ or higher.

7. Method according to any of claims 1-6, wherein in (c) i.e. start-up operation, the cathode side feed gas comprises one or more reducing species, suitably CO and/or H₂, and in addition to said reducing species, CO₂ and/or H₂O.

8. Method according to claim 7, wherein (c) further comprises:
- heating up said cathode side feed gas to a first temperature of 100-200°C below normal SOEC stack operation temperature;
- subsequently increasing the concentration of CO₂ and/or H₂O in said cathode side feed gas and further heating up to normal SOEC stack operation temperature.

9. Method according to any of claims 1-8, wherein any of:(a) interrupted hot-idle operation, (b) shut-down operation, or (c) start-up operation, comprises operating at temperatures of 500-700°C or below.

10. Method according to any of claims 1-9, wherein the small electrolysis current applied to the cells in the stack is 0.02-0.04 A/cm² active cell area, such as 0.03 A/cm² active cell area.

11. Method according to any of claims 1-10, wherein the transient operation is shut-down, i.e. operation (b), and the flow of inert flush gas, in particular a gas stream comprising CO₂ such as pure CO₂ is 0.02 NL/min/cm² active cell area or lower, such as 0.002 NL/min/cm² active cell area.

12. Method for transient operation of a solid oxide electrolysis cell (SOEC) stack having a cathode side and an anode side, the method comprising:
a shut-down operation by supplying a flush gas comprising CO₂ to said anode side, and recycling at least a portion of anode-side product gas stream comprising oxygen being generated during a prior normal operation of the SOEC stack, to the flush gas.

13. Method according to claim 12, further comprising: subsequently applying a small electrolysis current of 0.001-0.05 A/cm² active cell area to the cells in the SOEC stack, and electrochemically generating oxygen for thereby forming an anode-side product gas stream enriched in oxygen.

## Patentansprüche

1. Verfahren zum transienten Betrieb eines Festoxid-Elektrolysezellenstapels (SOEC-Stapel), der eine Kathodenseite und eine Anodenseite aufweist, wobei das Verfahren umfasst:
- Zuführen eines CO₂ umfassenden Spülgases zur Anodenseite;
- Anwenden eines kleinen Elektrolysestroms von 0,001-0,05 A/cm² aktiver Zellfläche auf die Zellen im SOEC-Stapel, um dadurch Sauerstoff auf der Anodenseite zu erzeugen oder jeden bereits vorhandenen Sauerstoff auf der Kathodenseite zur Anodenseite zu transportieren.

2. Verfahren nach Anspruch 1, umfassend:
(a) unterbrochenen Heißleerlaufbetrieb, wobei der Heißleerlaufbetrieb als Ruhespannungs-, (OCV)-Betrieb des SOEC-Stapels bei Temperaturen definiert ist, die unter der normalen Betriebstemperatur des SOEC-Stapels liegen, wie beispielsweise 10-200 °C, z. B. 50-200 °C oder 100-200 °C niedriger als eine normale Betriebstemperatur des SOEC-Stapels, wobei der unterbrochene Heißleerlaufbetrieb durch Zuführen des CO₂ umfassenden Spülgases zur Anodenseite, Anlegen des kleinen Elektrolysestroms an die Zellen im SOEC-Stapel und elektrochemisches Erzeugen von Sauerstoff durchgeführt wird, um dadurch einen mit Sauerstoff angereicherten anodenseitigen Produktgasstrom zu bilden;
oder
(b) Abschaltbetrieb durch Zuführen des CO₂ umfassenden Spülgases zur Anodenseite und Rückführen mindestens eines Abschnitts des anodenseitigen Produktgasstroms, der Sauerstoff umfasst, der während eines vorherigen Normalbetriebs des SOEC-Stapels erzeugt wurde, zu dem Spülgas, z. B. durch Kombinieren des mindestens einen Abschnitts des anodenseitigen Produktgasstroms, der Sauerstoff umfasst, mit dem Spülgas; Anlegen des kleinen Elektrolysestroms an die Zellen im SOEC-Stapel und elektrochemisches Erzeugen von Sauerstoff, um dadurch einen mit Sauerstoff angereicherten anodenseitigen Produktgasstrom zu bilden;
oder
(c) Startbetrieb durch Zuführen eines CO₂ umfassenden Spülgases zur Anodenseite; und durch Zuführen eines kathodenseitigen Zufuhrgasstroms, der CO₂, CO, H₂O, H₂ und Gemische davon, optional auch einen inerten Stoff wie N₂, He, Ar und Gemische davon umfasst, zur Kathodenseite; Anlegen des kleinen Elektrolysestroms an die Zellen im SOEC-Stapel, um mindestens einen Teil des bereits auf der Kathodenseite verfügbaren Sauerstoffs zur Anodenseite zu transportieren.

3. Verfahren nach Anspruch 2, wobei (a) weiter umfasst: Rückführen mindestens eines Abschnitts des mit Sauerstoff angereicherten anodenseitigen Produktgasstroms.

4. Verfahren nach einem der Ansprüche 2-3, wobei das mit Sauerstoff angereicherte anodenseitige Produktgas von Betrieb (a) oder der Sauerstoff umfassende anodenseitige Produktgasstrom von Betrieb (b) einen Sauerstoffgehalt von 5-100 Vol.-%, wie 10-60 Vol.- %, zum Beispiel 20-40 Vol.-% aufweist; oder wie 80-100 Vol.-%, zum Beispiel 95-100 Vol.- % O₂.

5. Verfahren nach einem der Ansprüche 2-4, wobei der mindestens eine Abschnitt des mit Sauerstoff angereicherten anodenseitigen Produktgasstroms, der im Betrieb (a) oder (b) zurückgeführt wird, zwischen 5 Vol.-% und 90 Vol.-% liegt, wie 10, 20, 30, 40, 50, 60, 70, 80 oder 85 Vol.-%, geeigneterweise im Bereich 5-50 Vol.-%.

6. Verfahren nach einem der Ansprüche 1-5, wobei das CO₂ umfassende Spülgas 5-100 Vol.-% CO₂, wie 20-100, 40-100, 50-100, 60-100, 70-100, 80-100 Vol.-% CO₂ umfasst, wobei das Spülgas geeigneterweise reines CO₂ ist, das 99,5 Vol.-% CO₂ oder mehr aufweist.

7. Verfahren nach einem der Ansprüche 1-6, wobei in (c), d. h. dem Startbetrieb, das kathodenseitige Zufuhrgas eine oder mehrere reduzierende Spezies, geeigneterweise CO und/oder H₂, und zusätzlich zu den reduzierenden Spezies CO₂ und/oder H₂O umfasst.

8. Verfahren nach Anspruch 7, wobei (c) weiter umfasst:
- Erhitzen des kathodenseitigen Zufuhrgases auf eine erste Temperatur von 100-200 °C unter einer normalen Betriebstemperatur des SOEC-Stapels;
- anschließendes Erhöhen der Konzentration von CO₂ und/oder H₂O in dem kathodenseitigen Zufuhrgas und weiteres Aufheizen auf eine normale Betriebstemperatur des SOEC-Stapels.

9. Verfahren nach einem der Ansprüche 1-8, wobei einer von: (a) unterbrochenem Heißleerlaufbetrieb, (b) Abschaltbetrieb oder (c) Startbetrieb einen Betrieb bei Temperaturen von 500-700 °C oder darunter umfasst.

10. Verfahren nach einem der Ansprüche 1-9, wobei der kleine Elektrolysestrom, der an die Zellen im Stapel angelegt wird, 0,02-0,04 A/cm² aktiver Zellfläche, z. B. 0,03 A/cm² aktiver Zellfläche beträgt.

11. Verfahren nach einem der Ansprüche 1-10, wobei der transiente Betrieb Abschalten, d. h. Betrieb (b) ist, und der Fluss von Inertspülgas, insbesondere ein Gasstrom, der CO₂, wie reines CO₂, umfasst, 0,02 NL/min/cm² aktiver Zellfläche oder weniger, z. B. 0,002 NL/min/cm² aktiver Zellfläche beträgt.

12. Verfahren zum transienten Betrieb eines Festoxid-Elektrolysezellenstapels (SOEC-Stapel), der eine Kathodenseite und eine Anodenseite aufweist, wobei das Verfahren umfasst:
einen Abschaltbetrieb durch Zuführen eines CO₂ umfassenden Spülgases zur Anodenseite und Rückführen mindestens eines Abschnitts des Sauerstoff umfassenden anodenseitigen Produktgasstroms, der während eines vorherigen Normalbetriebs des SOEC-Stapels erzeugt wurde, in das Spülgas.

13. Verfahren nach Anspruch 12, weiter umfassend: anschließendes Anlegen eines kleinen Elektrolysestroms von 0,001-0,05 A/cm² aktiven Zellbereich an die Zellen im SOEC-Stapel und elektrochemisches Erzeugen von Sauerstoff, um dadurch einen anodenseitigen, mit Sauerstoff angereicherten Produktgasstrom zu bilden.

## Revendications

1. Procédé de fonctionnement transitoire d'un empilement de cellules d'électrolyse à oxyde solide (SOEC) présentant un côté cathode et un côté anode, le procédé comprenant :
- la fourniture d'un gaz de rinçage comprenant du CO₂ audit côté anode ;
- l'application d'un faible courant d'électrolyse de 0,001-0,05 A/cm² de surface de cellule active aux cellules de l'empilement SOEC, pour générer ainsi de l'oxygène du côté anode ou pour transporter vers le côté anode tout oxygène déjà disponible du côté cathode.

2. Procédé selon la revendication 1, comprenant :
(a) un fonctionnement au ralenti à chaud interrompu, dans lequel le fonctionnement au ralenti à chaud est défini comme un fonctionnement à tension en circuit ouvert (OCV) de l'empilement SOEC à des températures inférieures à la température normale de fonctionnement d'empilement SOEC, telles que 10-200 °C par exemple 50-200 °C ou 100-200 °C de moins que la température normale de fonctionnement d'empilement SOEC, ledit fonctionnement au ralenti à chaud interrompu étant réalisé en fournissant ledit gaz de rinçage comprenant du CO₂ audit côté anode, en appliquant ledit faible courant d'électrolyse aux cellules dans l'empilement SOEC, et en générant électrochimiquement de l'oxygène pour ainsi former un flux de gaz produit côté anode enrichi en oxygène ;
ou
(b) un fonctionnement à l'arrêt en fournissant ledit gaz de rinçage comprenant du CO₂ audit côté anode, et en recyclant au moins une partie du flux de gaz produit côté anode comprenant de l'oxygène étant généré pendant un fonctionnement normal antérieur de l'empilement SOEC, en gaz de rinçage, par exemple en combinant la au moins une partie de flux de gaz produit côté anode comprenant de l'oxygène, avec le gaz de rinçage ; en appliquant ledit faible courant d'électrolyse aux cellules dans l'empilement SOEC, et en générant électrochimiquement de l'oxygène pour ainsi former un flux de gaz produit côté anode enrichi en oxygène ;
ou
(c) un fonctionnement de démarrage en fournissant un gaz de rinçage comprenant du CO₂ audit côté anode ; et en fournissant un flux de gaz d'alimentation côté cathode comprenant l'un quelconque parmi du CO₂, du CO, du H₂O, du H₂ et des mélanges de ceux-ci, facultativement également un inerte tel que l'un quelconque parmi le N₂, le He, l'Ar et des mélanges de ceux-ci, audit côté cathode ; en appliquant ledit faible courant d'électrolyse aux cellules de l'empilement SOEC pour transporter au moins une partie dudit oxygène déjà disponible du côté cathode, audit côté anode.

3. Procédé selon la revendication 2, dans lequel (a) comprend en outre : le recyclage d'au moins une partie du flux de gaz produit côté anode enrichi en oxygène.

4. Procédé selon l'une quelconque des revendications 2-3, dans lequel le gaz produit côté anode enrichi en oxygène du fonctionnement (a), ou le flux de gaz produit côté anode comprenant de l'oxygène du fonctionnement (b), présente une teneur en oxygène de 5-100 % en volume, telle que de 10-60 % en volume, par exemple de 20-40 % en volume ; ou telle que de 80-100 % en volume, par exemple de 95-100 % en volume d'O₂.

5. Procédé selon l'une quelconque des revendications 2-4, dans lequel la au moins une partie du flux de gaz produit côté anode enrichi en oxygène qui est recyclée dans le fonctionnement (a) ou (b) est comprise entre 5 % en volume et 90 % en volume, telle que 10, 20, 30, 40, 50, 60, 70, 80 ou 85 % en volume, de manière appropriée dans la plage de 5-50 % en volume.

6. Procédé selon l'une quelconque des revendications 1-5, dans lequel le gaz de rinçage comprenant du CO₂ contient 5-100 % en volume de CO₂, tel que 20-100, 40-100, 50-100, 60-100, 70-100, 80-100 % en volume de CO₂, de manière appropriée le gaz de rinçage est du CO₂ pur présentant 99,5 % en volume de CO₂ ou plus.

7. Procédé selon l'une quelconque des revendications 1-6, dans lequel, dans (c), c'est-à-dire le fonctionnement de démarrage, le gaz d'alimentation côté cathode comprend une ou plusieurs espèces réductrices, de manière appropriée du CO et/ou du H₂, et en plus desdites espèces réductrices, du CO₂ et/ou du H₂O.

8. Procédé selon la revendication 7, dans lequel (c) comprend en outre :
- le chauffage dudit gaz d'alimentation côté cathode à une première température de 100-200 °C en dessous de la température normale de fonctionnement d'empilement SOEC ;
- l'augmentation ultérieure de la concentration en CO₂ et/ou en H₂O dans ledit gaz d'alimentation côté cathode et le chauffage supplémentaire jusqu'à la température normale de fonctionnement d'empilement SOEC.

9. Procédé selon l'une quelconque des revendications 1-8, dans lequel l'un quelconque parmi : (a) un fonctionnement au ralenti à chaud interrompu, (b) un fonctionnement à l'arrêt, ou (c) un fonctionnement de démarrage, comprend le fonctionnement à des températures de 500-700 °C ou moins.

10. Procédé selon l'une quelconque des revendications 1-9, dans lequel le faible courant d'électrolyse appliqué aux cellules dans l'empilement est de 0,02-0,04 A/cm² de surface de cellule active, tel que 0,03 A/cm² de surface de cellule active.

11. Procédé selon l'une quelconque des revendications 1-10, dans lequel le fonctionnement transitoire est l'arrêt, c'est-à-dire le fonctionnement (b), et l'écoulement de gaz de rinçage inerte, en particulier un flux de gaz comprenant du CO₂ tel que du CO₂ pur équivaut à 0,02 NI/min/cm² de surface de cellule active ou moins, tel que 0,002 NI/min/cm² de surface de cellule active.

12. Procédé de fonctionnement transitoire d'un empilement de cellules d'électrolyse à oxyde solide (SOEC) présentant un côté cathode et un côté anode, le procédé comprenant :
un fonctionnement d'arrêt en fournissant un gaz de rinçage comprenant du CO₂ audit côté anode, et en recyclant au moins une partie du flux de gaz produit côté anode comprenant de l'oxygène généré pendant un fonctionnement normal antérieur de l'empilement SOEC, vers le gaz de rinçage.

13. Procédé selon la revendication 12, comprenant en outre : l'application ultérieure d'un faible courant d'électrolyse 0,001-0,05 A/cm² zones de cellules actives aux cellules de l'empilement SOEC, et en générant électrochimiquement de l'oxygène pour former ainsi un flux de gaz produit côté anode enrichi en oxygène.
